Europäisches Patentamt

European Patent Office

Office européen des brevets

(19)

(11) Publication number: 0 356 170
A2

# (12) EUROPEAN PATENT APPLICATION

(21) Application number: 89308407.9

(22) Date of filing: 18.08.89

(51) Int. Cl.⁵: G 01 F 1/32

(30) Priority: 19.08.88 GB 8819782

(43) Date of publication of application:
28.02.90 Bulletin 90/09

(84) Designated Contracting States: DE

(71) Applicant: NATIONAL RESEARCH DEVELOPMENT
CORPORATION
101 Newington Causeway
London SE1 6BU (GB)

(72) Inventor: Bentley, John Patrick
26 Primrose Close Hutton Meadows
Guisborough Cleveland TS14 8ED (GB)

Nichols, Anthony Richard
19 Turner Street
Redcar Cleveland TS10 1AZ (GB)

(74) Representative: Cullis, Roger
Patent Department National Research Development
Corporation 101 Newington Causeway
London SE1 6BU (GB)

The application is published incomplete as filed (Article 93 (2) EPC). The point in the description at which the omission obviously occurs has been left blank.
A request for addition has been filed pursuant to Rule 88 EPC. A decision on the request will be taken during the proceedings before the Examining Division (Guidelines for Examination in the EPO, A-V, 2.2).

(54) Flowmeters.

(57) A vortex-shedding flowmeter comprises at least one pair of substantially bar-shaped bluff bodies of substantially equal axial depth, each of which is stationarily and rigidly mounted within a conduit of substantially circular cross-section with its axis substantially transverse to the direction of flow wherein the sum of the ratios of length in the direction of flow to axial depth for said bodies falls in the range 0.5 to 0.8 and the ratio of the spacing between said bodies to the depth of said bodies falls in the range 0.1 to 0.4.

(c)

FIG.2

Description

## FLOWMETERS

This invention relates to flowmeters and, in particular, to flowmeters incorporating bluff bodies.

In US Patent 4350047 there is described a vortex-shedding flowmeter comprising two stationary, vortex-shedding cross-members (bluff bodies) disposed transversely to a stream of fluid. Each vortex member has a bluff face with sharp Karman vortex generating edges with independently selected edge to edge widths d of from 10% to 40% of the inside width of the conduit through which the fluid flows and lengths l of from 0.3 to 2.0d. The second cross-member is disposed downstream of the first cross-member a distance of from 4 to 15 times the width d of the first cross-member. Any sensor may be used in any location provided it or they sense the Karman vortices generated by the co-action of the two cross-members

In US Patent 4445388 there is described a vortex-shedding flowmeter for measuring the flow-rate of fluids conducted through a flow tube provided with a dual body shedder having a front section fixedly mounted across the tube, behind which there is a pivotally mounted rear section separated from the front section by a gap configured to produce a fluidic feedback path so that a strong hydraulic interaction takes place between the sections and both actively contribute to the formation of periodic vortices which are alternately shed on either side of the shedder. The rear section is mounted on a pivot shaft extending along an axis normal to the flow axis of the tube, whereby the vortices which appear on either side of the rear section induce the rear section to oscillate. These oscillations are sensed to produce a signal representing the flow rate.

We have devised a multiple bluff body whose geometry is optimised for maximum vortex signal strength and regularity.

According to the present invention, there is provided a vortex-shedding flowmeter comprising a plurality of substantially bar-shaped bluff bodies each of which is stationarily and rigidly mounted within a conduit of substantially circular cross-section with its axis substantially transverse to the direction of flow wherein the spacing between the ith and (i+l)th bluff bodies is substantially equal to $(x_i - x_{i+1} - l_{i+1})$, where $x_i, x_{i+1}$ are the respective distances from the ith and (i+l)th bodies to the downstream point of maximum vorticity and $l_{i+1}$ is the depth of the (i+l)th body.

The invention will be particularly described by way of example with reference to the accompanying drawings, in which

Figure 1a to c shows an arrangement of bars of rectangular cross-section

Figure 2a to c is an explanatory diagram used to illustrate the optimum geometry arrangement in accordance with the present invention.

Figures 3 to 7 are the maps of the strength of vortex field for various bluff bodies and combinations thereof, and

Figure 8a b show the parameters used in the calculation of various specific embodiments

Figure 9 is a graph showing the relationship between parameters used in the specific embodiments, and

Figure 10 illustrates the optimum arrangement of two rectangular bars derived using the information in Figures 8 and 9

Figure 11 is an explanatory diagram showing the relative positions of vorticity maxima and bluff bodies.

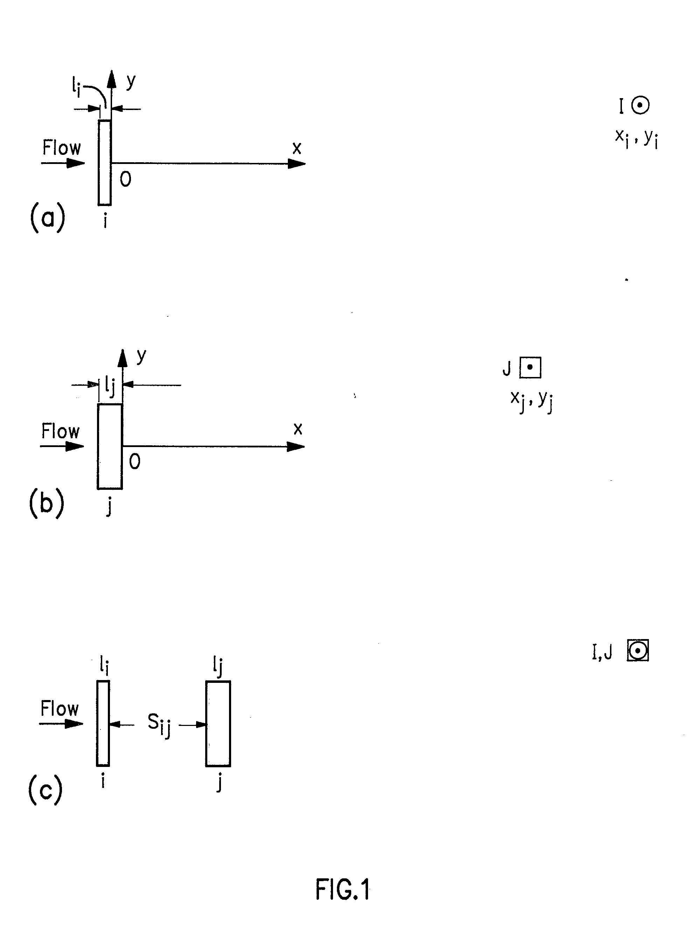

Referring now to the drawings, Figure 1a shows the position I of maximum vorticity downstream of a single bar 1 of depth $l_i$ arranged transverse to the direction of flow. The coordinates of I are $x_i, y_i$. Figure 1b shows the corresponding position J of maximum vorticity downstream of a single bar j of depth $l_j$ arranged transverse to the direction of flow. The coordinates of J are $x_j, y_j$. Figure 1c shows shows the optimal arrangement of bars i and j; their separation $s_{ij}$ is such that I and J coincide.

Each bar stationarily and rigidly mounted in a circular pipe with its axis transverse to the direction of flow. Each bar is a short distance downstream of the one in front and in complete alignment with it. Then the arrangement of the two bars (i,j) will be optimum if there exists a separation $s_{ij}$ between the bars, such that I and J coincide, i.e. such that:

$$x_i = s_{ij} + l_j + x_j , \quad y_i = y_j , \quad (1)$$

Although Figure 1 shows the use of rectangular bars, the principle applies to bars of any shape e.g. circular, triangular and T-shaped.

In all of these optimum arrangements, the separations s are small: this means that vortices are shed only from the downstream bluff body. However this vortex shedding from the downstream bluff body is enhanced by the oscillatory motion of boundary layers of fluid in the narrow gap or gaps between the bluff bodies. In these optimum arrangements, gap boundary layer oscillations have the same frequency and are in phase with the vortex shedding from the downstream bluff body and thus strongly reinforce it. The effect of this reinforcement is to give a very strong and regular vortex pattern at or behind the downstream bluff body. A sensor positioned to detect this regular pattern of vortices gives a high amplitude, very regular signal with a high signal to noise ratio, this enables highly repeatable measurements of vortex frequency to be made. This high signal quality is obtained even though the ratio d/D of bluff body width d to pipe diameter D (blockage ratio) is much smaller than in existing flowmeters.

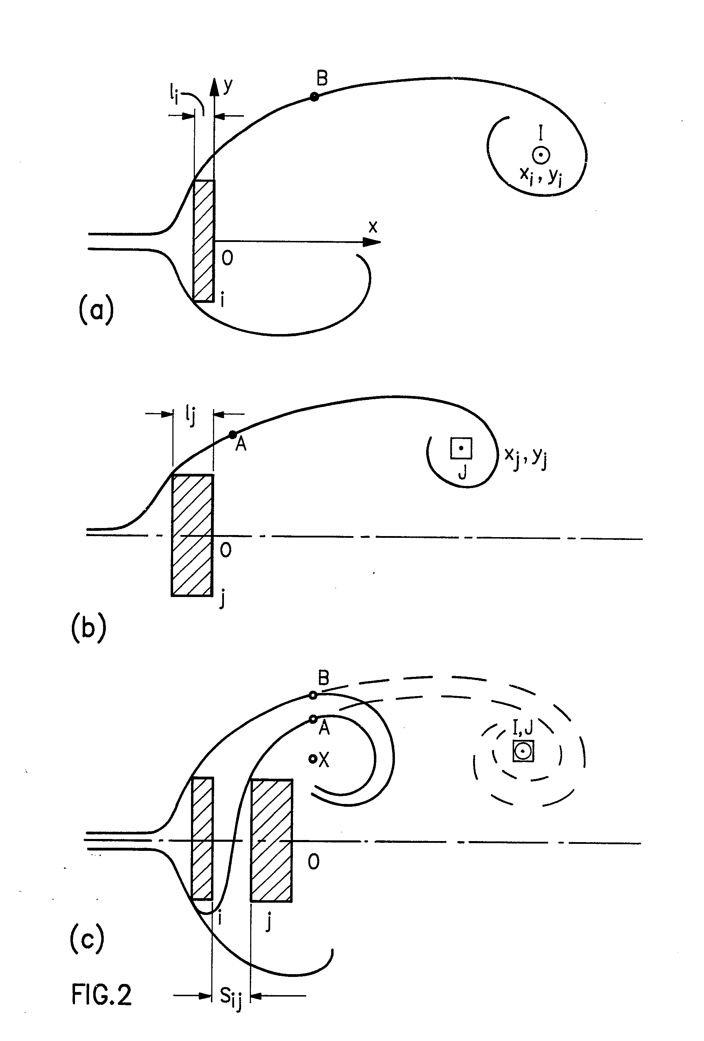

Referring now to Figure 2, which shows the pattern of vortex shedding for two individual bluff bodies and the optimum arrangement of the two. The patterns correspond to one half period of the vortex shedding cycle.

2

Figure 2(a) shows the pattern of vortex shedding from the single bluff body of depth $l_i$. I is the position of maximum vorticity, coordinates $(x_i, y_i)$; this corresponds to the position of maximum development of a vortex. Upstream of I vortices are not fully developed, downstream of I vortices are gradually broken down due to the effects of random turbulence.

Figure 2(b) shows the pattern of vortex shedding from the single bluff body j of depth $l_j$, j is deeper than i, i.e. $l_j > l_i$. Comparing Figures 2(a) and 2(b), we see that in 2(a) the oscillating boundary layers follow a higher trajectory than those in 2(b). The position of maximum vorticity is J, coordinates $(x_j, y_j)$; J is further upstream than I i.e. $x_i \, x_j$ and $y_i$; $= y_j$. In both patterns the boundary layers are executing sinusoidal oscillations at the vortex shedding frequency. $A(x_A, y_A)$ and $B(x_B, y_B)$ are typical boundary layer positions, in Figures 2(b) and 2(a) respectively, where these oscillations are in phase. B is further downstream than A and above A, i.e. $x_B > x_A$, $y_B > y_A$. However the distances between B and A and I and J, measured along the x axis are equal i.e.:
$x_B - x_A = x_i - x_j$

Figure 2(c) shows the optimal arrangement of the bluff bodies i,j, the separation $s_{ij}$ is such that I and J coincide, i.e.:
$x_i = s_{ij} + l_j + x_j$ , $y_i = y_j$

This also means that the positions A and B of in-phase boundary layers also coincide.

During the half period shown, the motion of boundary layers around upstream bluff body i above the centre line is largely unaffected by the presence of downstream bluff body j, as far as point B. This is because these boundary layers follow a high trajectory which takes them largely away from the influence of j. However, boundary layers moving around i below the centre line are entrained in the gap between the bluff bodies and move up through the gap towards the top surface of j. They then follow a lower trajectory towards the point A. This means that we now have two sets of oscillating boundary layers, one in the vicinity of A, the other in the vicinity of B. These will be in phase and will therefore move together and reinforce each other giving strong vortex shedding which is enhanced relative to that from the individual bluffs i and j. However the extra vorticity of these combined layers means that they roll into a full developed vortex centred on the point X, where X is well upstream of the point of coincidence J, I. Thus the position of maximum vorticity for the combination i,j is at X rather than J,I. The pattern of vortex shedding during the next half period is different in that the vortex patterns and points I, J, A, B, X are now reflected about the centre line. i.e. have the same x values but equal, negative y values. This means that boundary layers move downwards through the gap and around the bottom surface of j and are reinforced with boundary layers moving around the bottom surface of i. These layers combine to give maximum vorticity at a point below the centre line, which is the reflection of X in the centre line.

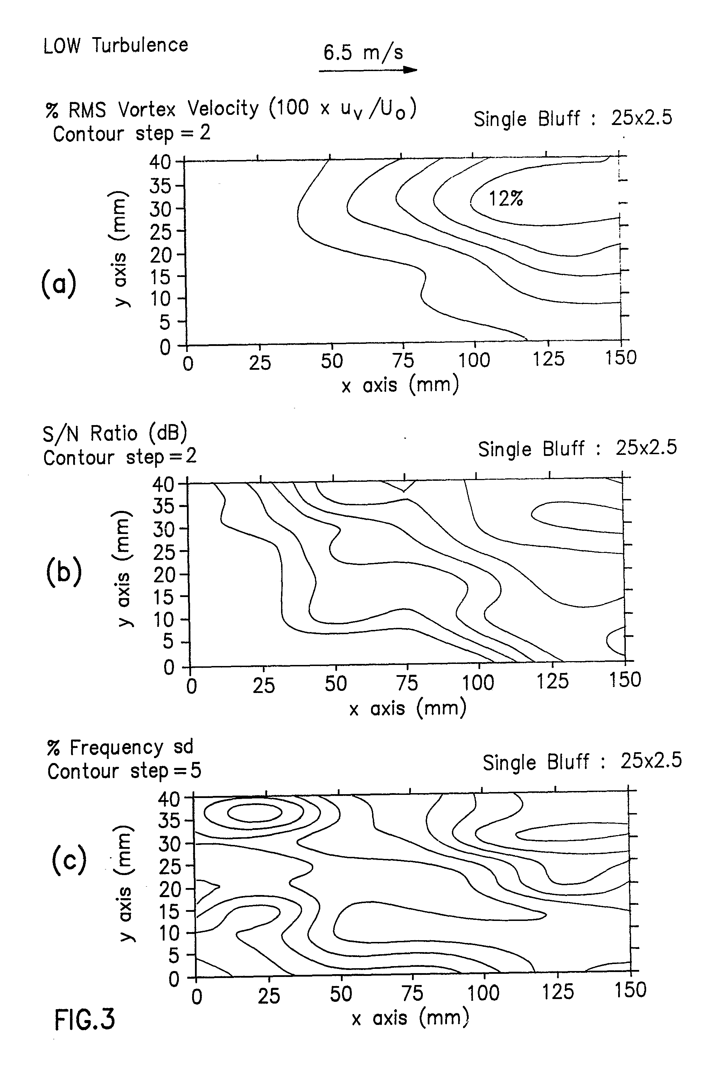

Figure 3 shows the strength of the vortex field behind a flat rectangular plate, there is a single maximum of 12%.

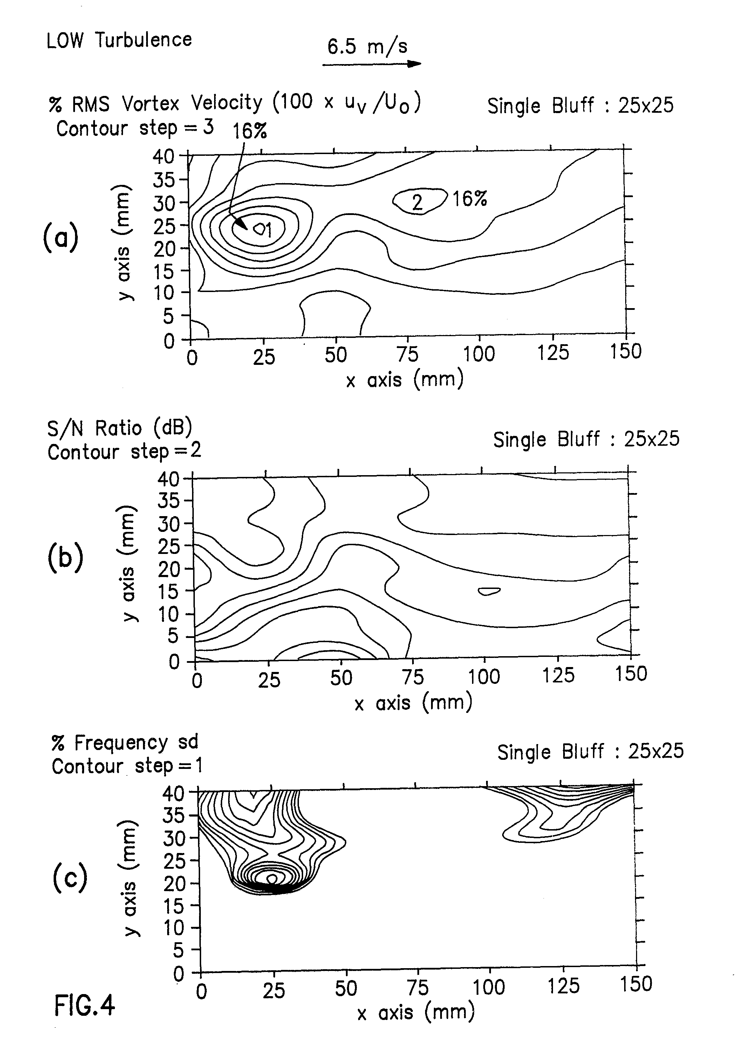

Figure 4 shows the strength of the vortex field behind a square-section body (note different x and y scales), there are two maxima 1 and 2 both of 16%.

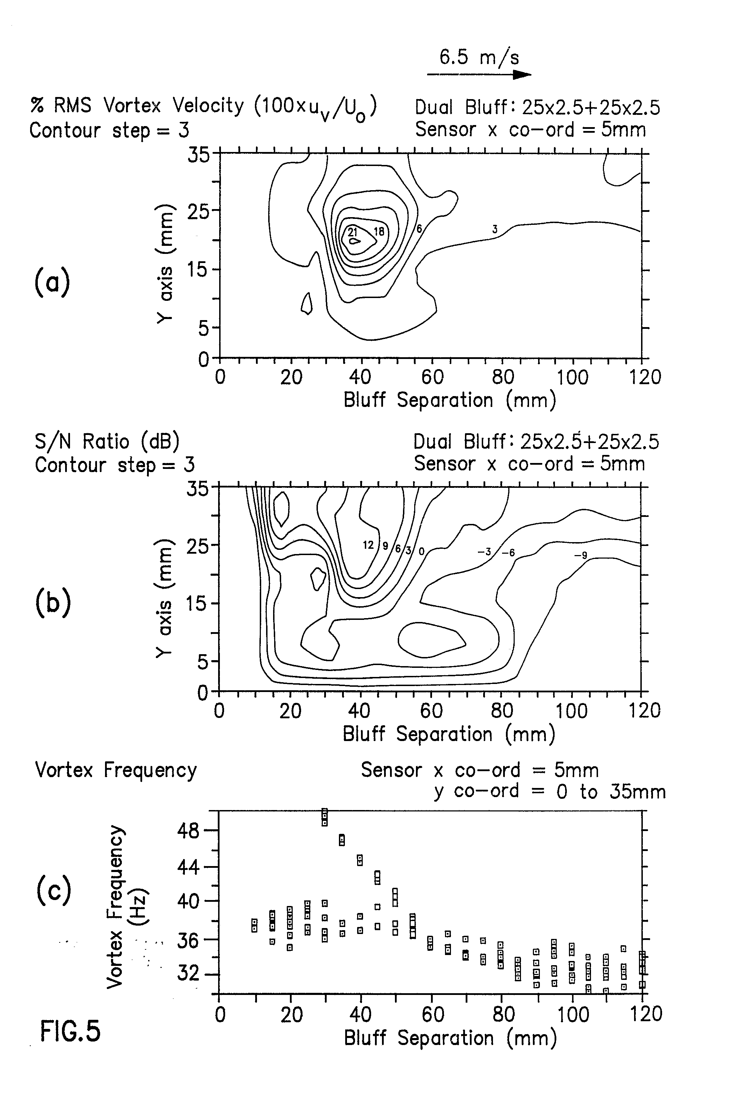

It will be seen that it is impossible to find a small separation at which the maxima for two flat plates coincide. The corresponding arrangement of two flat plates (Figure 5) is not optimal and gives a maximum strength of 21%.

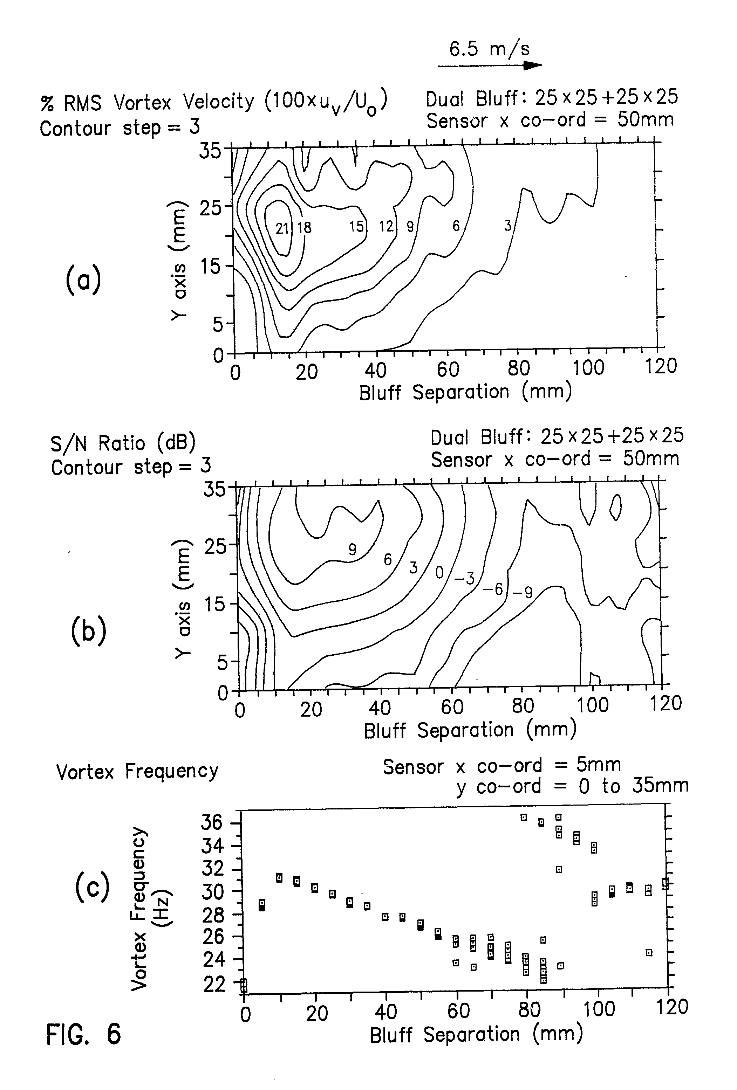

It will also be seen that it is impossible to find a separation at which the maxima for two squares coincide. The corresponding arrangement of two squares (Figure 6) is not optimal and gives a maximum strength of 21%.

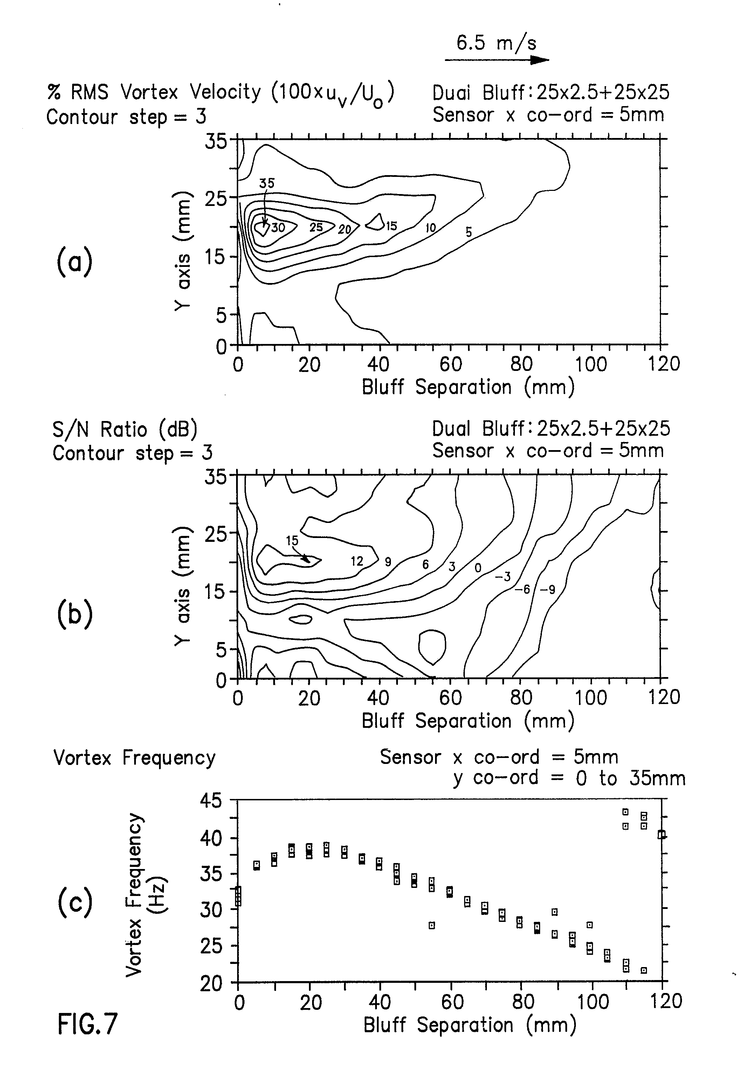

Overlaying 3 and 4, with the plate in front of the square, we see that, for a separation ≈ 10mm, the flat plate maximum approximately coincides with maximum 2 for the square. The corresponding dual arrangement (Figure 7) is close to optimum and gives a maximum strength of 35% and signal to noise ratio of 15dB.

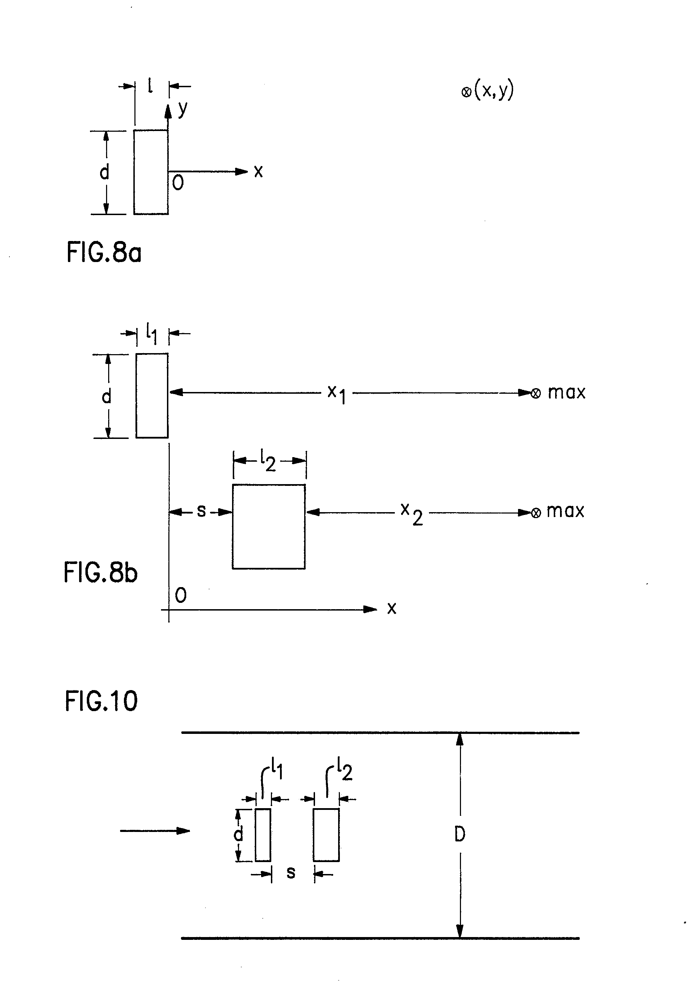

Specific examples of the use of the principle of optimum geometry were determined using the arrangements of Figures 8a and 8b.

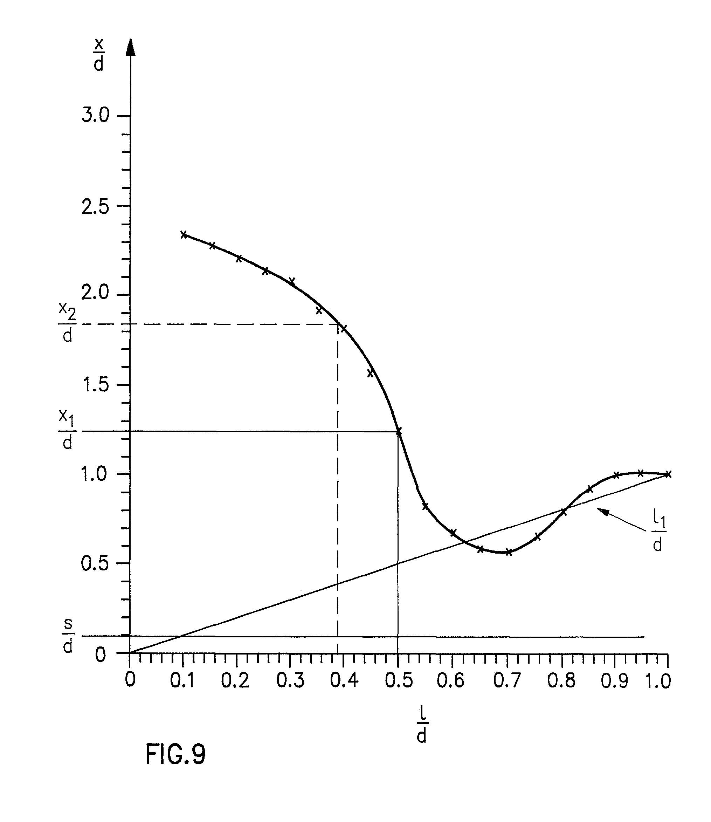

Figure 9 shows the relationship between x/d and l/d.

If positions of maximum vorticity for single bluff bodies coincide, then
$x_1 = x_2 + l_2 + s$
i.e.

$$\frac{x_1}{d} = \frac{x_2}{d} + \frac{l_2}{d} + \frac{s}{d}$$

$x_1/d$ and $x_2/d$ can be expressed in terms of polynomials in l/d

$$\left(\frac{x_1}{d}\right) = \sum_{n=0}^{n=m} a_n \left(\frac{l_1}{d}\right)^n \qquad \left(\frac{x_2}{d}\right) = \sum_{n=0}^{n=m} a_n \left(\frac{l_2}{d}\right)^n$$

since $l_1/d = p$, $l_2/d = q$, $s/d = r$

the condition for the coincidence of the points of maximum vorticity is:-

$$\sum_{n=0}^{n=m} a_n p^n \quad = \quad \sum_{n=0}^{n=m} a_n q^n + r + q$$

LHS                RHS

Computer finds values of p,q,r such that LHS = RHS within ±0.1.

The following optimum configurations were calculated for a medium turbulence level at a velocity of 6.5 m/s

The first polynomial coefficients entered were:-

$X^{\wedge}$ 0 coefficient = 2.57116665

$X^{\wedge}$ 1 coefficient = -2.82254467

$X^{\wedge}$ 2 coefficient = 7.17809076

$X^{\wedge}$ 3 coefficient = -8.73971476

$X^{\wedge}$ 4 coefficient = -9.41723784

The second polynomial coefficients entered were:-

$X^{\wedge}$ 0 coefficient = 2294.7176

$X^{\wedge}$ 1 coefficient = -21745.7711

$X^{\wedge}$ 2 coefficient = 87567.1117

$X^{\wedge}$ 3 coefficient = -194004.061

$X^{\wedge}$ 4 coefficient = 255241.573

$X^{\wedge}$ 5 coefficient = -199368.959

$X^{\wedge}$ 6 coefficient = 85613.0444

$X^{\wedge}$ 7 coefficient = -15596.6334

The $l_1/d$ i.e. (p) incremental value = 0.1

The s/d i.e. (r) incremental value = 0.1

The $l_2/d$ i.e. (Q) incremental value = 0.1

The limit of MOD(A-B) = 0.1

Anaylsis of these data show that, for dual bluff body flow meters, the optimal range of combined bluff body length is given by

$0.5 \leqq p + q \leqq 0.8$ (condition 1)

where $p = l_1/d$, $q = l_2/d$, $r = s/d$

the optimal range of gap length is given by

$0.1 \leqq r \leqq 0.4$ (condition 2)

These criteria are combined with either

coincidence of positions of maximum vorticlty for single bluff bodies (condition 3(I)

coincidence of positions of maximu vorticity for an upstream single bluff body and dual bluff body combination (condition 3(II)

or coincidence of positions of maximum vorticity for a downstream single bluff body and dual bluff body combination

These criteria are shown in Table 2

Table 1

| | p | q | r | A | B | A–B |
|---|---|---|---|---|---|---|
| M,H | 0.100 | 0.400 | 0.100 | 2.351 | 2.290 | 0.061 |
| M,H | 0.100 | 0.400 | 0.200 | 2.351 | 2.390 | −0.039 |
| M,H | 0.100 | 0.500 | 0.500 | 2.351 | 2.273 | 0.078 |
| H | 0.100 | 0.500 | 0.600 | 2.351 | 2.373 | −0.022 |
| M | 0.100 | 0.800 | 0.700 | 2.351 | 2.296 | 0.055 |
| | 0.100 | 0.800 | 0.800 | 2.351 | 2.396 | −0.045 |
| M | 0.100 | 0.900 | 0.400 | 2.351 | 2.304 | 0.047 |
| | 0.100 | 0.900 | 0.500 | 2.351 | 2.404 | −0.053 |
| M,H | 0.200 | 0.400 | 0.100 | 2.209 | 2.290 | −0.081 |
| M,H | 0.200 | 0.500 | 0.400 | 2.209 | 2.173 | 0.035 |
| M,H | 0.200 | 0.500 | 0.500 | 2.209 | 2.273 | −0.065 |
| | 0.200 | 0.600 | 0.900 | 2.209 | 2.172 | 0.037 |
| | 0.200 | 0.700 | 0.900 | 2.209 | 2.170 | 0.039 |
| | 0.200 | 0.800 | 0.600 | 2.209 | 2.196 | 0.013 |
| H | 0.200 | 0.800 | 0.700 | 2.209 | 2.296 | −0.087 |
| | 0.200 | 0.900 | 0.300 | 2.209 | 2.204 | 0.005 |
| M | 0.200 | 0.900 | 0.400 | 2.209 | 2.304 | −0.095 |

Table 1 continued

| | | | | | | |
|---|---|---|---|---|---|---|
| M,H | 0.300 | 0.500 | 0.200 | 2.058 | 1.973 | 0.085 |
| H | 0.300 | 0.500 | 0.300 | 2.058 | 2.073 | −0.015 |
| | 0.300 | 0.600 | 0.700 | 2.058 | 1.972 | 0.086 |
| | 0.300 | 0.600 | 0.800 | 2.058 | 2.072 | −0.014 |
| | 0.300 | 0.700 | 0.700 | 2.058 | 1.970 | 0.089 |
| | 0.300 | 0.700 | 0.800 | 2.058 | 2.070 | −0.011 |
| | 0.300 | 0.800 | 0.400 | 2.058 | 1.996 | 0.063 |
| | 0.300 | 0.800 | 0.500 | 2.058 | 2.096 | −0.037 |
| M | 0.300 | 0.900 | 0.100 | 2.058 | 2.004 | 0.055 |
| | 0.300 | 0.900 | 0.200 | 2.058 | 2.104 | −0.045 |
| M,H | 0.400 | 0.500 | 0.100 | 1.790 | 1.873 | −0.083 |
| | 0.400 | 0.600 | 0.500 | 1.790 | 1.772 | 0.018 |
| | 0.400 | 0.600 | 0.600 | 1.790 | 1.872 | −0.082 |
| | 0.400 | 0.700 | 0.500 | 1.790 | 1.770 | 0.021 |
| | 0.400 | 0.700 | 0.600 | 1.790 | 1.870 | −0.079 |
| H | 0.400 | 0.800 | 0.100 | 1.790 | 1.696 | 0.095 |
| | 0.400 | 0.800 | 0.200 | 1.790 | 1.796 | −0.005 |
| | 0.500 | 0.600 | 0.100 | 1.273 | 1.372 | −0.098 |
| M | 0.500 | 0.700 | 0.100 | 1.273 | 1.370 | −0.096 |

M indicates combination was tested at medium turbulence (turbulence intensity at pipe centre $\approx 1.5\%$)
H indicates combination was tested at high turbulence (turbulence intensity at pipe centre $\approx 7\%$)
(typical turbulence intensity at pipe centre in fully developed turbulent flow = 3%)
    All combinations with $\%\sigma > 5.5\%$ at medium turbulence
AND $\%\sigma > 14.4\%$ at high turbulence
were rejected. It was found that the rejected combinations did not satisfy conditions $p+q > 0.8$ and/or $r > 0.4$. The combinations listed in Table 2 obey these conditions i.e.
$0.5 \leqq p + q \; 0.8$
and $0.1 \leqq r \leqq 0.4$
where $\sigma\%$ is the standard deviation of individual vortex cycles, expressed as a percentage of mean frequency.
    Table 1 lists the optimum dimensions and separations for various dual bluff arrangements operating in the 6.5m/s, medium turbulence situation. The accuracy of these can be verified using the graph based on the "x" and "l" relationship.
    Consider, for example,
$l_2/d = 0.5$ and $s/d = 0.1$
    From Table 1 these values correspond to an $l/d$ of 0.4. From Figure 9, it can be seen that $l_2/d = 0.5$ gives an $x_2/d$ of approx. 1.27. From

$$\frac{x_1}{d} = \frac{x_2}{d} + \frac{l_2}{d} + \frac{s}{d}$$

$$= 0.5 + 1.27 + 0.1$$

$$= 1.87$$

From the graph, an x/d of 1.87 equates to an l/d of 0.39. Hence the relationship shown in Figure 9 may be used to determine any of the other remaining unknown variables.

It is notable that the curve has a minimum when l/d = 0.66. At this value, vortices are shed closer to the bluff than those for any other bluff dimension. This corresponds with the fact that the drag coefficient of a bluff of l/d of 0.66, is at a maximum.

For dual bluff body vortex flowmeters, the following conditions set boundaries for optimal operation:=

Condition 1
$0.5 \leq p + q \leq 0.8$
where $p = l_1/d$, $q = l_2/d$ and $r = s/d$

Condition 2
$0.1 \leq r \leq 0.4$

Condition 3(I)
(coincidence of positions of maximum vorticity for single bluff bodies)
$x_1 = x_2 + l_2 + s$

Condition 3(II)
(coincidence of positions of maximum vorticity for upstream single bluff body and dual bluff body combination
$x_1 = x_c + l_2 + s$

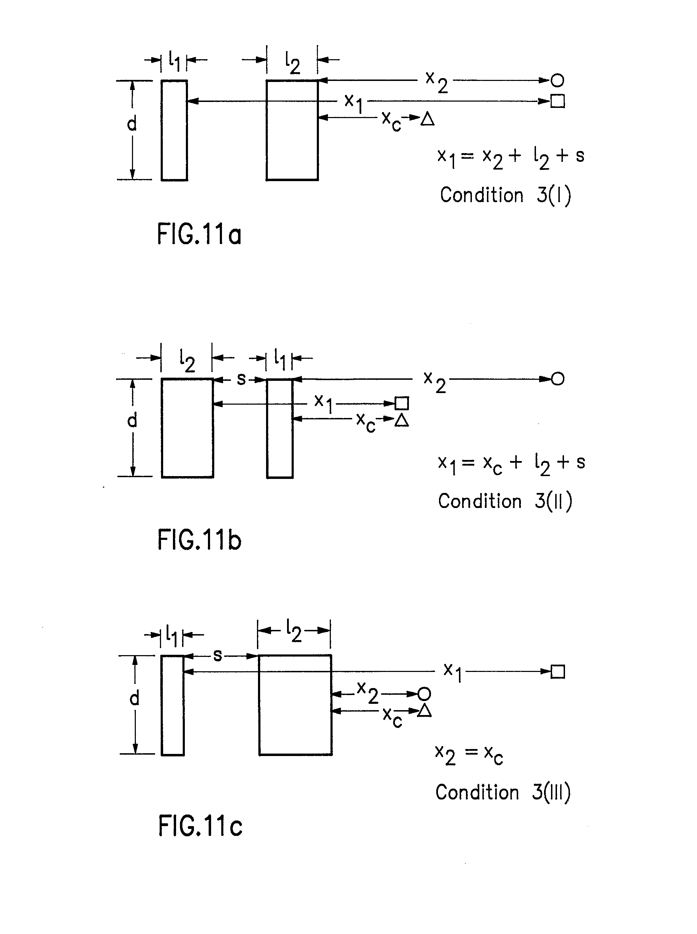

Condition 3(III)
coincidence of positions of maximum vorticity for downstream single bluff body combination
$x_2 = x_c$
where $p = l_1/d$, $q = l_2/d$, $r = s/d$, $x_1$, $x_2$ and $x_c$ are the respective distances to positions of maximum vorticity (Figure 11).

Optimal operation is defined by Condition 1 AND Condition 2 AND {Condition 3(I) OR Condition 3(II) OR Condition 3(III)}

In a further embodiment of the invention a flowmeter includes a plurality of pairs of bluff bodies, each pair of which taken individually satisfies Condition 1 AND condition 2 AND {Condition 3(I) OR Condition 3(II) OR Condition 3(III)}

**Claims**

1. A vortex-shedding flowmeter comprising at least one pair of substantially bar-shaped bluff bodies of substantially equal axial depth, each of which is stationarily and rigidly mounted within a conduit of substantially circular cross-section with its axis substantially transverse to the direction of flow wherein the sum of the ratios of length in the direction of flow to axial depth for said bodies falls in the range 0.5 to 0.8 and the ratio of the spacing between said bodies to the depth of said bodies falls in the range 0.1 to 0.4.

2. A vortex-shedding flowmeter as claimed in claim 1 wherein the position of maximum vorticity of said pair of bluff bodies is substantially coincident with the position of maximum vorticity of each of said pair of bluff bodies taken individually.

3. A vortex-shedding flowmeter as claimed in claim 1 wherein the position of maximum vorticity of said pair of bluff bodies is substantially coincident with the position of maximum vorticity of the upstream member of said pair of bluff bodies.

4. A vortex-shedding flowmeter as claimed in claim 1 wherein the position of maximum vorticity of said pair of bluff bodies is substantially coincident with the position of maximum vorticity of the downstream member of said pair of bluff bodies.

5. A vortex-shedding flowmeter as claimed in claim 2 wherein the position of maximum vorticity of a second pair of bluff bodies is substantially coincident with the position of maximum vorticity of each of said pair of bluff bodies taken individually.

6. A vortex-shedding flowmeter as claimed in claim 2 wherein the position of maximum vorticity of a second pair of bluff bodies is substantially coincident with the position of maximum vorticity of the upstream member of said pair of bluff bodies.

7. A vortex-shedding flowmeter as claimed in claim 2 wherein the position of maximum vorticity of a second pair of bluff bodies is substantially coincident with the position of maximum vorticity of the downstream member of said pair of bluff bodies.

8. A vortex-shedding flowmeter as claimed in claim 3 wherein the position of maximum vorticity of a second pair of bluff bodies is substantially coincident with the position of maximum vorticity of the upstream member of said pair of bluff bodies.

9. A vortex-shedding flowmeter as claimed in claim 3 wherein the position of maximum vorticity of a second pair of bluff bodies is substantially coincident with the position of maximum vorticity of the downstream member of said pair of bluff bodies.

10. A vortex-shedding flowmeter as claimed in claim 4 wherein the position of maximum vorticity of a second pair of bluff bodies is substantially coincident with the position of maximum vorticity of the downstream member of said pair of bluff bodies.

11. A vortex-shedding flowmeter substantially as herein described with reference to and as shown in the accompanying drawings.

FIG.1

FIG.2

LOW Turbulence

6.5 m/s

% RMS Vortex Velocity $(100 \times u_v/U_o)$
Contour step = 2

Single Bluff : 25x2.5

(a)

12%

y axis (mm)

x axis (mm)

S/N Ratio (dB)
Contour step = 2

Single Bluff : 25x2.5

(b)

y axis (mm)

x axis (mm)

% Frequency sd
Contour step = 5

Single Bluff : 25x2.5

(c)

y axis (mm)

x axis (mm)

FIG.3

LOW Turbulence

6.5 m/s

% RMS Vortex Velocity ($100 \times u_v /U_o$)
Contour step = 3    16%    Single Bluff : 25x25

(a)

S/N Ratio (dB)
Contour step = 2    Single Bluff : 25x25

(b)

% Frequency sd
Contour step = 1    Single Bluff : 25x25

(c)

FIG.4

6.5 m/s

% RMS Vortex Velocity (100×u$_V$/U$_O$)  Dual Bluff: 25×2.5+25×2.5
Contour step = 3  Sensor x co−ord = 5mm

(a)

Y axis (mm) / Bluff Separation (mm)

S/N Ratio (dB)  Dual Bluff: 25×2.5+25×2.5
Contour step = 3  Sensor x co−ord = 5mm

(b)

Y axis (mm) / Bluff Separation (mm)

Vortex Frequency  Sensor x co−ord = 5mm
y co−ord = 0 to 35mm

(c)

Vortex Frequency (Hz) / Bluff Separation (mm)

FIG.5

FIG. 6

6.5 m/s

% RMS Vortex Velocity ($100 \times u_v/U_o$)     Dual Bluff: 25x2.5+25x25
Contour step = 3                                 Sensor x co-ord = 5mm

(a)

35
30  25  20  15
10
5

Y axis (mm): 35, 25, 15, 5, 0
Bluff Separation (mm): 0, 20, 40, 60, 80, 100, 120

S/N Ratio (dB)                                   Dual Bluff: 25x2.5+25x25
Contour step = 3                                 Sensor x co-ord = 5mm

(b)

15
12  9  6  3  0  -3  -6  -9

Y axis (mm): 35, 25, 15, 5, 0
Bluff Separation (mm): 0, 20, 40, 60, 80, 100, 120

Vortex Frequency                                 Sensor x co-ord = 5mm
                                                 y co-ord = 0 to 35mm

(c)

Vortex Frequency (Hz): 45, 40, 35, 30, 25, 20
Bluff Separation (mm): 0, 20, 40, 60, 80, 100, 120

FIG.7

$\otimes(x,y)$

FIG.8a

FIG.8b

FIG.10

FIG.9

$x_1 = x_2 + l_2 + s$

Condition 3(I)

FIG.11a

$x_1 = x_c + l_2 + s$

Condition 3(II)

FIG.11b

$x_2 = x_c$

Condition 3(III)

FIG.11c